# EUROPEAN PATENT APPLICATION

(11) **EP 1 666 369 A1**
(43) Date of publication of application: **07.06.2006**
(21) Application number: 05464002.4
(22) Date of filing: 02.12.2005
(51) Int. Cl.: B65D 47/20

(54) **Pressure controlling dispensing device for beverage container**

(30) Priority: 03.12.2004 US 4180
(71) Applicant: Drajan, Cornell, Hedersonville, NC 28792 (US); Malau, Cornelia Niculina, Slatina, jud. Olt (RO)
(72) Inventor: Drajan, Cornell, Hedersonville, NC 28792 (US); Malau, Cornelia Niculina, Slatina, jud. Olt (RO)
(74) Representative: Faighenov, Marioara

(57) **Abstract**

The invention refers to a pressure controlling dispensing device for beverage drinks, utilized for sports or traveling drinking containers.

The dispensing device, according to the invention, comprises a normally closed valve (14) which, by the help of an annular diaphragm (15), through an up-and-down movement, closes and opens a central aperture (3) of an annular plate (2), the valve (14) being mounted on the diaphragm (15) by a reinforcement plate (16), a coiled spring (21) holding the valve closed On the outside, in a hole (10) of a flange (6), a suction device of the drink (7) made of one interior tubular part (9) and one exterior tubular part (8), which can be rotated in a 360° angle between a vertically upward position for usage and a vertically downward position for storage, is mounted.

## Description

This invention relates to a pressure controlling dispensing device for beverage container, utilized for traveling or sports drink containers.

The prior art has proposed a distribution device for beverage containers, which contains a controlling element of the fluid flow out of the container so that the fluid remains under pressure when sopped through the spout. The spout is attached to a housing enclosure cap body that holds a spring, a center perforated membrane, a valve stem and a valve. The housing enclosure of the cap body is extended inside the container that works as a guide for the valve stem and which incorporates the valve seat. The valve stem is attached to the perforated membrane on one side and to the valve on the other side. When the suction is applied to the spout, the membrane moves the valve and opens a flow path, thereby allowing the fluid to flow through the valve stem and the perforated membrane towards the mouth. When the suction is stopped, the spring closes the valve against the gas pressure in the container.

The prior art has also proposed a self-regulating dispensing device, with a suction spout, utilized for containers that comprise beverage or hot drinks under pressure. The device includes a spout without run-offs, tightly attached to the housing enclosure of the cap body that holds a spring, a centrally perforated membrane, a valve stem and a valve. The valve is opened only when someone sops through the spout after which it remains closed. The housing enclosure of the cap body is extended inside the container that works as a guide for the valve stem and which incorporates the valve seat. The valve stem is attached to the perforated membrane on one side and to the valve on the other side. When the suction is applied at the spout the membrane moves downward opening the valve, allowing the fluid to flow around the valve stem through the perforated membrane towards the mouth. When the suction is stopped the spring closes the valve while the internal pressure of the gas when higher than the atmospheric pressure can maintain the valve closed. The fluid that opens the valve is absorbed through a flexible tube towards the bottom part of the container, allowing the drain of the receipt in vertical position. The ventilation of the air is provided through the same valve when the internal pressure of the gas drops below the atmospheric pressure. [US 2004/001800 A1]

The technical problem that the invention solves is the fact that it provides a closure for beverage or similar drinks container, which maintains the beverage at an over-atmospheric pressure, allowing it to be sopped out of the container, without removing the cap screw, and which holds the beverage without it becoming worn out.

The dispensing device, embodying the invention, comprises a cylindrical body having an annular plate with a central aperture, a normally closed valve realized with a valve which, with the help of a diaphragm, by an up-and-down movement, opens and closes a central aperture of an annular plate, the valve being fastened to the diaphragm through a reinforcement plate, a coiled spring holding the valve closed, and to the outside a drinking suction device is mounted in a hole of a flange consisting of an internal tubular part and an external tubular part that can be rotated in a 360° angle between an upward vertical using position and a downward holding position.

The internal tubular part of the suction element is mounted in a hole of a flange through an external lip, and some nipples allow the lip to deform on the interior while assembling, making the insertion of the suction element through the hole easier, an "○" shaped ring may, if desired, be provided for sealing.

The device embodying the invention, as another execution example, contains an annular diaphragm with a central extension which sustains itself to a ball-shaped valve and a coiled spring which is found in a cup which has an aperture on its bottom part, cup which is mounted on a spread lip of the central aperture of the annular plate.

The device embodying the invention, as another execution example, contains a closing cap which has a central hole into which a button is mounted above the annular diaphragm, and which by pressing the annular diaphragm and further through the central extension, will release the beverage through the central aperture towards the suction device of the drink.

By applying the invention, one can obtain the advantage of a superior sealing of the container's interior in which the beverage is kept.

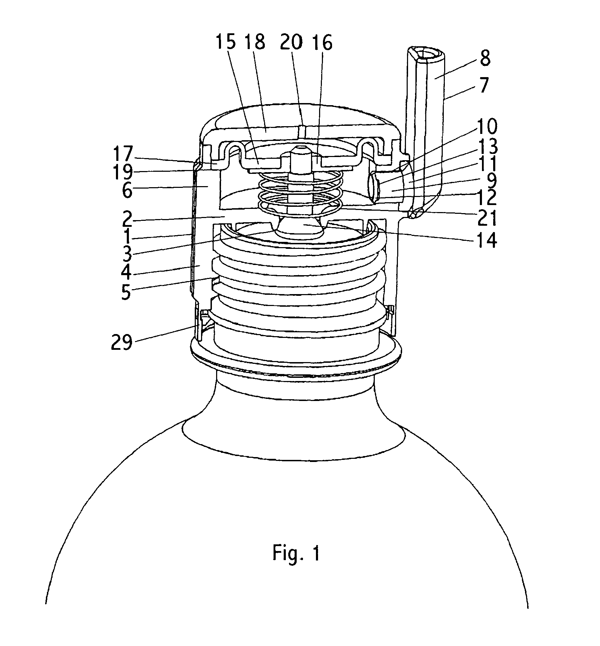

Forwards are given six embodiment examples of the invention that are in connection to and with figures 1...8, which represent:
Fig. 1, a sectional view of a bisecting plane, of a pressure controlling dispensing device installed on an upright container:
Fig. 2, a front view of the container with the device embodying the invention, with its valve closed, with its suction device rotated downward;
Fig. 3, a sectional view of a bisecting plane, of a pressure controlling dispensing device in the second embodiment example;
Fig. 4, a sectional view of a bisecting plane, of a pressure controlling dispensing device in the third embodiment example;
Fig. 5, a sectional view of a bisecting plane, of a device according to the invention, in a fourth embodiment example;
Fig. 6, a sectional view of a bisecting plane, of a device according to the invention, in a fifth embodiment example;
Fig. 7, a sectional view of a bisecting plane, of a device according to the invention, in a sixth embodiment example;
Fig. 8, a section view of a bisecting plane, of a device according to the invention, in a sixth embodiment example, in a inverted position.

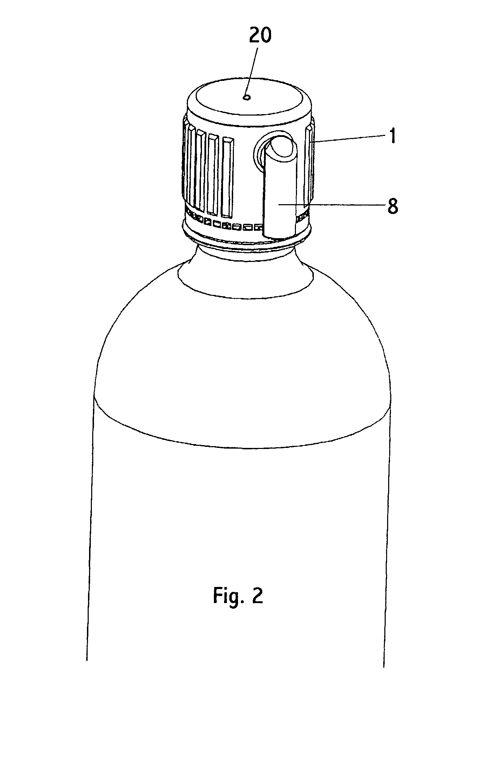

The pressure controlling dispensing device for beverage container, as shown in Fig. 1, consists of a cylindrical body 1, which is furnished at the exterior with nipples, which on the inside has an annular plate 2 with a central aperture 3 with the flanged edge that divides the body into two parts and that are, a dependent cylindrical cup 4, which has an interior coiled thread 5 and a circumferential flange 6 which extends ascending and which sustains a rotating suction device of the drink 7. The annular plate 2 comprises to the edge an annular shoulder for the guiding and sealing of the container. The suction device 7 consists of an exterior tubular part 8 and an interior tubular part 9, which is in fact an extension of the exterior tubular part 8. The exterior tubular part 8 and an interior tubular part 9 interweave through a known mode (not shown). The interior tubular part 9 is introduced in flange 6 through a hole 10. A sealing ring-shaped fitting 11 can be provided if necessary. The interior tubular part 9 is retained in hole 10 by an external collar 12. A nipple 13 allows the collar 12 to deform at the interior while assembling. This arrangement allows the external tubular part 8 to rotate in a 360° angle between a vertical upward position (Fig. 1, 3, 4, 5 and 6) for utilizing and a vertical downward position (Fig. 2) for storage and transportation, as well as for sealing containers before sale.

Through the annular plate 2 with the central aperture 3, the beverage can pass from the container to the suction device of the drink 7 via the chamber defined by the plate 2 and the flange 6. The inferior head of a valve 14 blocks the aperture 3 when the suction of the drink is not applied to the container.

The valve 14 is moved up and down, in the upper part of body 1 by an annular diaphragm 15, of which it is bonded by a reinforcement plate 16, which reinforces the diaphragm 15. A thickened periphery 17 of the diaphragm 15 is tightly squeezed between a closure cap 18 and a counterbore shoulder 19 in flange 6 so that no fluid (gas or liquid) can leak past. The cap 18 is retained in the counterbore 19 by interaction of an annular rib and corresponding groove (unidentified by reference).

An aperture 20 in the cap 18 maintains atmospheric pressure above the diaphragm 15. By applying moderate mouth suction through the exterior tubular part 8, one can easily move the valve 14 downward, allowing the fluid to flow through the central aperture 3 and out through the suction device of the drink 7.

In order to keep the valve closed, a coiled spring 21 is inserted between the annular plate 2 and the reinforcement plate 16.

According to this embodiment example, in order to drink the beverage, the container must be bent so that the fluid reaches the valve 14, because if the bottle is hold in an upright position, the sopped fluid will be gas. In this case, the users will have to turn the container before the discharging of the valve. If one wants that the container, according to the invention, to work in an upright position of the container, an extension tube (unidentified by reference) might be added from the central aperture 3 of the annular plate 2 almost to the bottom of the container. This tube might be sold as an accessory of the valve allowing the customer to configure the container at his own liking.

In any case, once pressurized the fluid is released through the valve, the pressure on the part of the diaphragm 15 grows, providing a regulation effect of the pressure in order to prevent overwhelming flowing speeds.

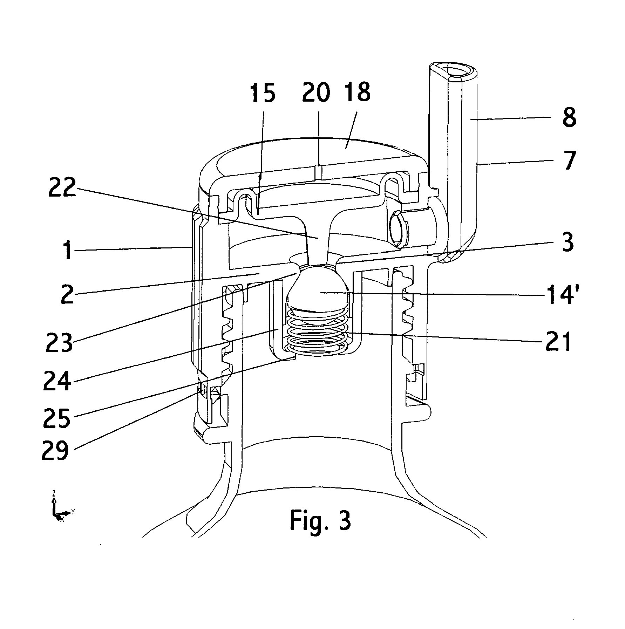

In the second embodiment (according to Fig. 3), the annular diaphragm 15 has a central extension 22 by the size of the distance between the annular diaphragm 15 and the annular plate 2 with the central aperture 3. The aperture 3 of the annular plate 2 has a flanged and downward extended lip 23, on which a cup 24 with a hole 25 on its base is mounted by pressing. In this cup 24 there is a coiled spring 21 and a ball-shaped valve 14'.

In resting state, the valve 14' is pushed upward by the coiled spring 21 and so it obturates the central aperture 3 of the annular plate 2. When suction is applied through the suction device 7 a depression between the annular diaphragm 15 and the annular plate 2 is produced, the annular diaphragm 15 is pushed downward, and the central extension 22 pushes the valve 14' downward releasing the aperture 3 through which the beverage will flow.

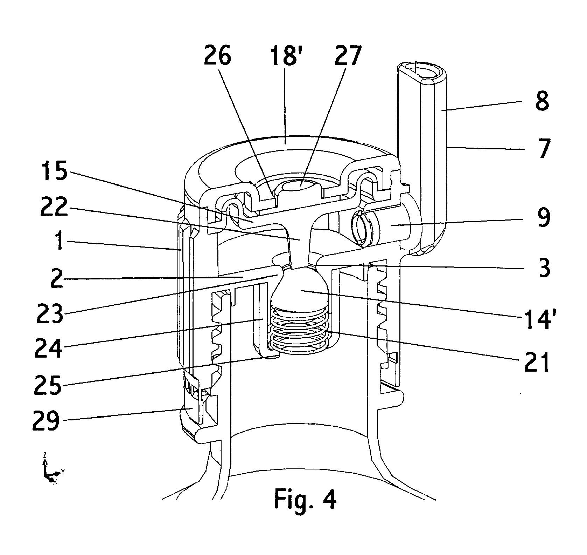

In the third embodiment (according to Fig. 4), the closure cap 18' has a central hole 26 in which a button 27 will be mounted above the annular diaphragm 15. The pressure of the button 27 opens the valve 14' so that through the exterior tubular part 8, rotated to 45° in regard to the vertical plan, it is possible to pour the drink from the container into the glass. In order to drink from container, the beverage drink will be sopped through the suction device 7, the central extension 22 of the annular diaphragm 15 will press the valve 14' downward releasing the beverage through the aperture 3 of the annular plate 2 towards the exterior through the suction device of the drink 7.

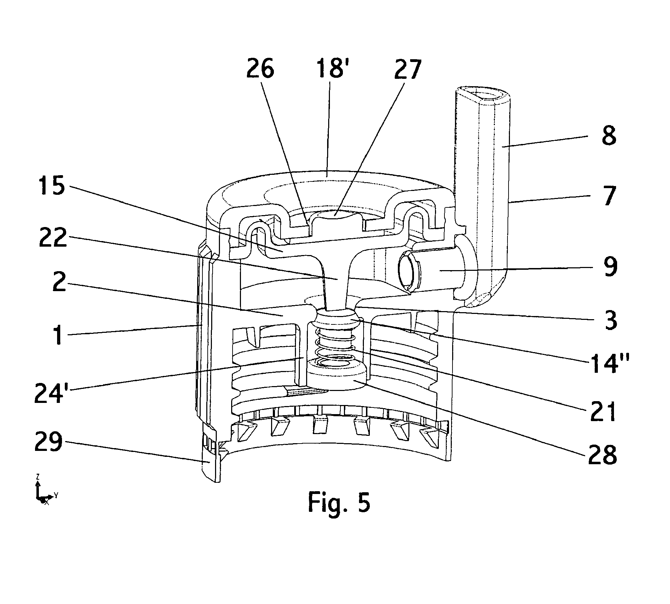

In the fourth embodiment (according to Fig. 5), a mushroom-shaped valve 14" is used which obturates the central aperture 3, the valve 14" being made of a soft flexible material. The coiled spring 21 is to be supported on an annular piece 28, which has a central hole. The coiled spring 21 is slides on the mushroom leg. The piece 28 closed by pressing a cup 24' that is fixed on the annular plate 2, surrounds the central aperture 3. The cylindrical body 1 is provided with a seal 29.

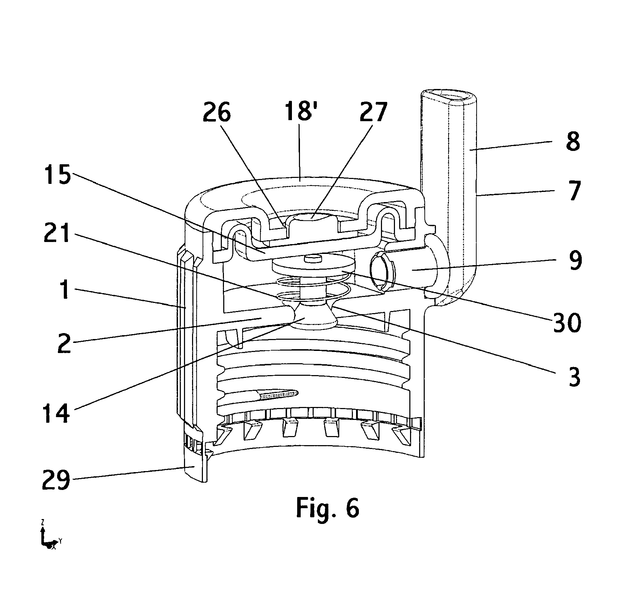

In the fifth embodiment (according to Fig. 6) if the container is unused, the inferior head of a valve 14 blocks the aperture 3, the valve 14 being supported in the upper chamber of the cylindrical body 1 by the coiled spring 21. The coiled spring 21 is supported in underside by the annular plate 2 and in upside by a disk 30 with a central hole by the help of which it is fixed to the superior head of the valve 14. The valve 14 will be operated by diaphragm 15 by the pressure. As in the third and fourth embodiments, by pressing button 27, the valve is opened, and it is possible to pour the content of the container into the glass through the suction device 7.

In all embodiment examples, in order to drink the beverage, the container must be bent so that the liquid reaches the valve. An extension tube (not shown) might be added in order to allow the upright functioning of the container.

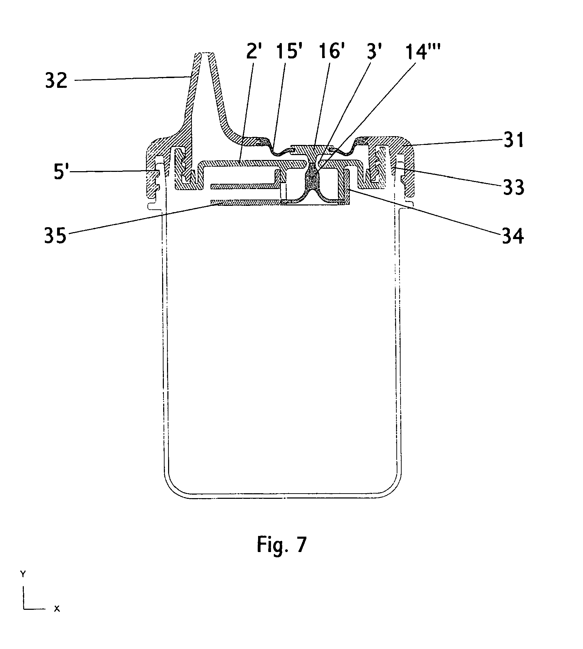

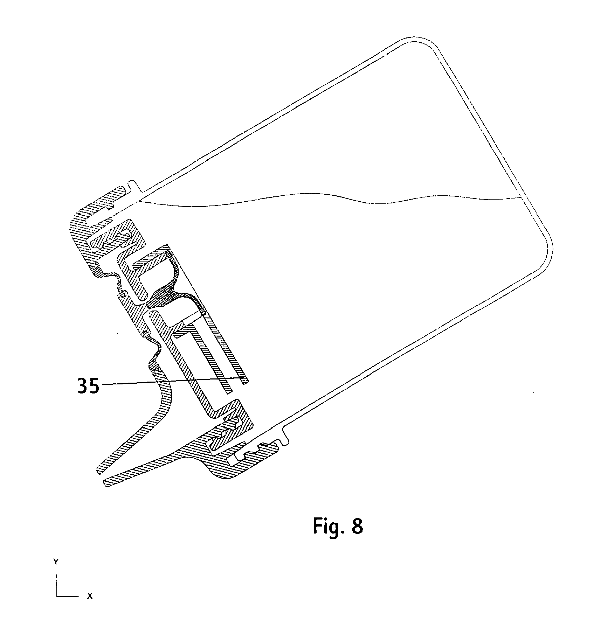

In a sixth embodiment (according to Fig. 7 and 8) the device according to the invention is used as a drinking device for children, having an exterior cap 31 with a spout 32, as an upward orientated extension and interior coiled thread 5'. Diaphragm 15' with reinforcement plate 16' tight to it, are mounted directly on the exterior cap 31, which has on its edge an annular shoulder 33 for the guiding and sealing of the container. Diaphragm 15' is exposed to the outside, even to the atmospheric pressure. On the exterior cap 31 is mounted by head bolting an annular plate 2' with an aperture 3' in which a valve 14"' closes or opens aperture 3'. The valve 14'" is activated by the reinforcement plate 16' through the diaphragm 15'. The valve 14"' is seated, elastically, in a cup 34 under the interior annular plate 2', to which a collecting tube 35 is attached, which when the suction is applied must be immersed in liquid by bending the container as shown in Fig. 8.

As in the example previously presented, the user can change the working orientation of the container by attaching a tube (not shown) that extends from the collecting tube 35 to its bottom part.

I presently prefer that all molded parts of the dispensing device, according to the invention, to be made of polyethylene terephthalate (PET), except for the diaphragms 15 and 15' which are made out of a soft flexible material such as rubber. Other materials may be substituted.

## Claims

1. Pressure controlling dispensing device for beverage drinks comprising a cylindrical body (1) that has an annular plate (2) on the inside with a centered aperture (3) and an elastic membrane, **characterized in that** it consists of a normally closed valve (14) which, through an annular diaphragm (15), by an up-and-down movement, closes and opens a central aperture (3) of an annular plate (2), the valve (14) being mounted on the diaphragm (15) by a reinforcement plate (16), a coiled spring (21) holding the valve closed, and to the exterior a suction device of the drink (7) it is mounted in a hole (10) of a flange (6) which is formed of an internal tubular part (9) and an external tubular part (8) which can be rotated in a 360° angle between a vertically upward using position, and a vertically downward storage position.

2. Dispensing device, according to claim 1, **characterized in that** the internal tubular part (9) of the suction device (7) is mounted in a hole (10) in the flange (6) through an external lip (12), and some nipples (13) allow the lip (12) to deform inwardly on assembly, making the introduction of the suction device of the drink (7) into the hole (10) easier, an "O" shaped ring (11) might be provided for sealing.

3. Dispensing device, according to claim 1, **characterized in that** in the second embodiment example the annular diaphragm (15) has a central extension (22) which sustains itself to a ball-shaped valve (14') and a coiled spring (21) which is found in a cup (24) which has an aperture (25) on its bottom part, cup (24) which is mounted on a spread lip (23) of the central aperture (3) of the annular plate (2).

4. Dispensing device, according to claim 1, **characterized in that** in the third embodiment example the closing cap (18') has a central hole (26) into which a button (27) is mounted above the annular diaphragm (15), and which by pressing the annular diaphragm (15) and further through the central extension (22), will release the beverage through the central aperture (3) towards the suction device of the drink (7).

5. Dispensing device, according to claim no. 1, **characterized in that** in a fourth embodiment example a mushroom-shaped valve (14") made of a soft flexible material is used, and the coiled spring 21, which slides on the mushroom leg, is supported on an annular piece (28) with a central hole, the piece (28) being closed by pressing a cup (24') that is fixed on the annular plate (2).

6. Dispensing device, according to claim no. 1, **characterized in that** in a fifth embodiment example the valve (14) that opens and closes the central aperture (3), through which the liquid passes from the container is supported in the upper chamber of the cylindrical body (1) by the coiled spring (21), which at underside is supported by the annular plate (2) and at upside is supported by a disk (30) with a central hole by the help of which it is fixed to the superior head of the valve (14).

7. Dispensing device, according to claim no. 1, **characterized in that** in a sixth embodiment example the diaphragm (15'), with its reinforcement plate (16') attached to it, is mounted directly on an exterior cap (31) which contains a spout (32), as a upward orientated extension, a valve (14'''), which closes or opens an aperture (3') of the interior annular plate (2'), being elastically placed in a cup (34) mounted under the annular plate (2'), to which a collecting tube (35) is attached.
